Europäisches Patentamt

European Patent Office

Office européen des brevets

(19)

(11) Veröffentlichungsnummer: **0 173 016**
A2

## (12) EUROPÄISCHE PATENTANMELDUNG

(21) Anmeldenummer: 85107661.2

(22) Anmeldetag: 21.06.85

(51) Int. Cl.⁴: **H 02 H 9/04**

(30) Priorität: 27.08.84 DE 3431478

(43) Veröffentlichungstag der Anmeldung: 05.03.86
Patentblatt 86/10

(84) Benannte Vertragsstaaten: **AT CH DE LI**

(71) Anmelder: **Siemens Aktiengesellschaft, Berlin und München Wittelsbacherplatz 2, D-8000 München 2 (DE)**

(72) Erfinder: **Wolf, Johann, Föhrenweg 20, D-8401 Pentling (DE)**

(54) **Elektrische Installationsanlage mit Überspannungsableitern.**

(57) Elektrische Installationsanlage zur Speisung von Verbrauchern, insbesondere mit elektronischen Bauteilen, aus einem Netz, die durch Überspannungsableiter (1) zu Erdpotential gegen Überspannung gesichert sind, wobei die Überspannungsableiter selbst durch eine Vorrichtung gesichert sind. Erfindungsgemäß ist vorgesehen, daß jedem Überspannungsableiter (1) erdseitig ein Kaltleiterelement (2) funktionsmäßig in Reihe nachgeschaltet ist.

EP 0 173 016 A2

Siemens Aktiengesellschaft  Unser Zeichen
Berlin und München  VPA 84 P 3347 E

Elektrische Installationsanlage mit Überspannungsableitern

Die Erfindung bezieht sich auf eine elektrische Installationsanlage zur Speisung von Verbrauchern, insbesondere
mit elektronischen Bauteilen, aus einem Netz, im einzelnen nach Oberbegriff von Patentanspruch 1.

Elektrische Geräte, die von einem Leitungsnetz versorgt
werden, können durch Überspannungen, wie sie durch
Blitzeinschläge und Schaltvorgänge im Netz auftreten
können, beschädigt oder zerstört werden. Um dies zu verhindern, werden in der Regel Überspannungsableiter im
Netz der Energieversorgungsunternehmen eingesetzt. Geräte moderner Technik können dadurch nicht ausreichend
geschützt werden. Man ist daher bemüht, die Überspannungsableiter näher zu den Verbrauchern zuzuordnen.
Solche Überspannungsableiter können im einzelnen Spannungsbegrenzer, Funkenstrecken oder nichtlineare Widerstände, wie Varistoren sein.

Eine bekannte Schutzeinrichtung gegen Überspannungen
arbeitet mit besonders abgestimmten Fehlerstromschutzschaltern (DE-PS 30 29 453). Um eine Installationsanlage auch gegen Belastungen bei defekten Überspannungsableitern zu schützen, sind eigene Abschaltvorrichtungen
für die Überspannungsableiter vorgesehen worden.

Es ist auch bekannt, die Ableitströme bei defekten Überspannungsableitern zu begrenzen, indem mit einer Funkenstrecke ein spannungsabhängiger Widerstand, beispielsweise ein Varistor, in Reihe geschaltet ist, so daß

No 2 Po/04.06.1985

ein sogenannter Ventilableiter entsteht (DE-PS
30 29 453).

Der Erfindung liegt die Aufgabe zugrunde, den Einsatz
von Überspannungsableitern zum einen zu erweitern und
zum anderen zu erleichtern. Im engeren Sinn soll eine
Installationsanlage bereitgestellt werden, die Defekte
von Überspannungsableitern einfach und zuverlässig erkennt, so daß in üblicher Weise die Anlage je nach
Notwendigkeit abgeschaltet oder gelegentlich instandgesetzt werden kann.

Die Lösung der geschilderten Aufgabe besteht nach der
Erfindung zunächst darin, daß jedem Überspannungsableiter erdseitig ein Kaltleiterelement funktionsmäßig
in Reihe nachgeschaltet ist. Hierbei wird genutzt, daß
Kaltleiter kurzzeitig nahezu stromdurchlässig ohne
Spannungsabfall sind, was bei Überspannungen, bei denen
der Überspannungsableiter durchlässig sein soll, vorteilhaft ist, wenn keine Spannungsaufteilung zwischen
Überspannungsableiter und nachgeschalteter Vorrichtung
bzw. Element auftreten soll.

Bei schadhaftem Überspannungsableiter geht die Kennlinie des Kaltleiters dagegen nach einem bestimmten,
über die Zeit integrierten Wärmeimpuls in eine Kennlinie mit hohem Widerstand, also hohem Spannungsabfall
über, so daß bei schadhaftem Überspannungsableiter
der Strom begrenzt wird. Deshalb wird der auf Erdpotential vorgesehene Anlagenteil potentialmäßig
nicht angehoben, so daß eine Gefährdung ausgeschlossen ist. Der Kaltleiter muß daher nicht so sorgfältig
auf die Anlage abgestimmt werden, wie es bei nichtlinearen Widerständen mit Kennlinien, wie sie der
Varistor aufweist, der Fall ist.

- 3 -    VPA 84 P 3347 E

Die Lösung der engeren Aufgabe besteht darin, daß mit den Überspannungsableitern erdseitig ein Kaltleiterelement verbunden ist, von dessen Anschlüssen jeweils eine elektrisch leitende Verbindung zu einer Überwachungsvorrichtung geführt ist. Das Kaltleiterelement leitet Überspannungen von den Überspannungsableitern nach Erde ab. Bei länger anstehendem Ableitungsstrom infolge eines schadhaften Überspannungsableiters kann der Spannungsabfall am Kaltleiter für eine geeignete Signalweitergabe genutzt werden.

Diese Signalgabe kann im einfachsten Fall optisch oder akustisch erfolgen. Wenn die Überwachungsvorrichtung im wesentlichen ein Relais ist, das eine Meldeleitung beaufschlagt, kann dieses Signal für eine Entscheidung oder eine automatische Abschaltung genutzt werden.

Um die Stoßstrombelastungen am Kaltleiter zu verringern, kann diesem ein Kondensator parallelgeschaltet werden.

Man kann auch Schaltkontakte in der Leitung zwischen Netz und Überspannungsableiter vorsehen, und das zuvor geschilderte Relais auf die Schaltkontakte direkt einwirken lassen.

Die Erfindung soll nun anhand von in der Zeichnung grob schematisch wiedergegebenen Ausführungsbeispielen näher erläutert werden:

In Fig. 1 ist eine Installationsanlage mit Überspannungsableitern veranschaulicht, die durch eine Vorrichtung gesichert ist.

In Fig. 2 ist ein anderes Ausführungsbeispiel wiedergegeben.

In Fig. 3 ist eine Installationsanlage mit Überspannungsableitern veranschaulicht, die durch eine Überwachungsvorrichtung gesichert sind.

In Fig. 4 ist ein anderes Ausführungsbeispiel einer
Anlage nach Fig. 3 dargestellt.

In Fig. 5 ist ein anderes Ausführungsbeispiel für eine
Installationsanlage mit Überwachungsvorrichtung wiedergegeben.

In Fig. 6 ist ein weiteres Ausführungsbeispiel der Installationsanlage veranschaulicht.

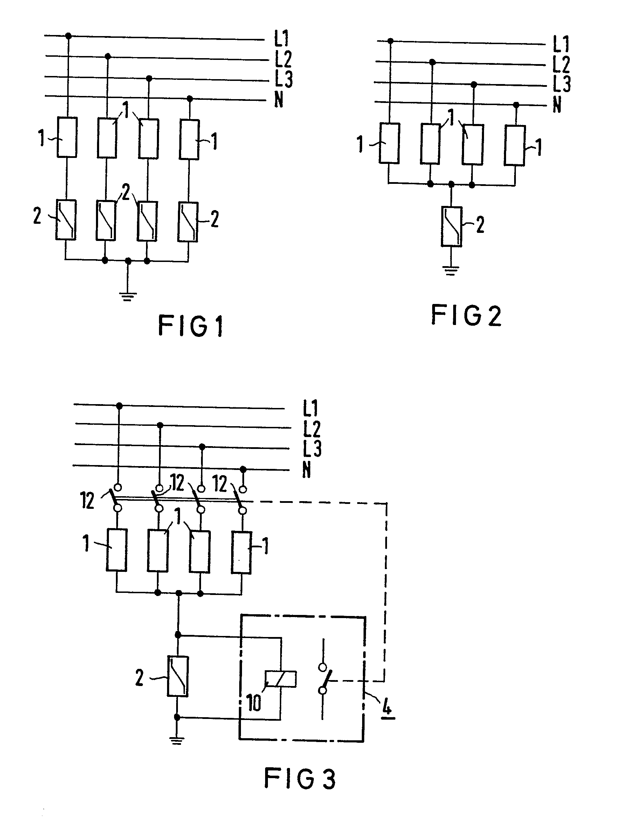

Die elektrische Installationsanlage nach Fig. 1 weist
ein Netz mit den Außenleitern L1, L2 und L3 sowie dem
Neutralleiter N auf. Hieran anzuschließende Verbraucher
sind durch Überspannungsableiter 1 geschützt, die Überspannungen nach Erde ableiten.

Mit den Überspannungsableitern 1 ist erdseitig jeweils
ein Kaltleiterelement 2 in Reihe nachgeschaltet.

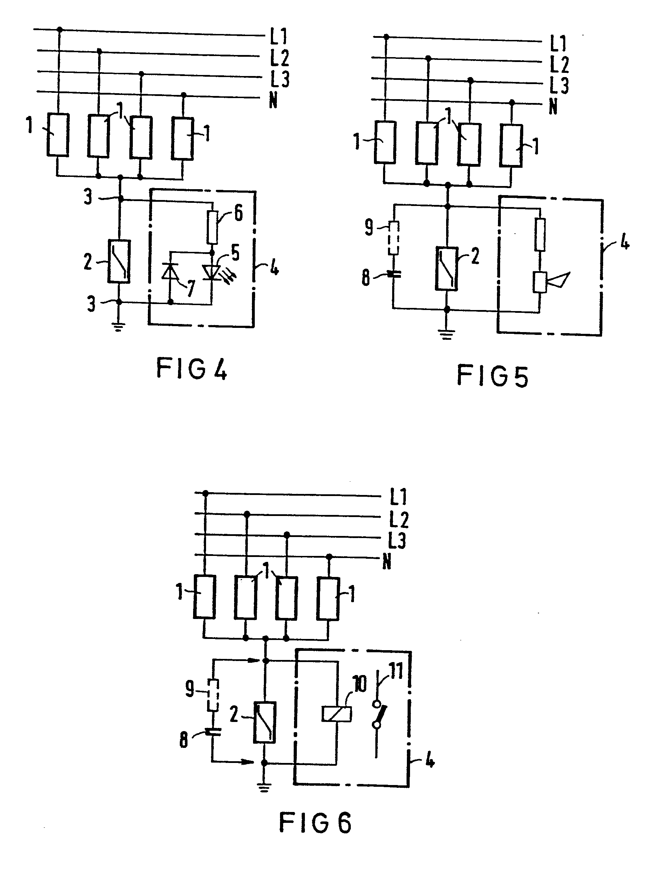

Nach Fig. 2 ist ein Kaltleiterelement 2 allen Überspannungsableitern 1 funktionsmäßig in Reihe nachgeschaltet. Fig. 3 kann als Abwandlung der Fig. 6 verstanden werden, die später erläutert wird.

Mit den Überspannungsableitern 1 nach Fig. 4 ist erdseitig ein Kaltleiterelement 2 elektrisch verbunden.
Von dessen Anschlüssen 3 ist jeweils eine elektrisch
leitende Verbindung zu einer Überwachungsvorrichtung 4
geführt. Im Ausführungsbeispiel nach Fig. 1 ist die
Überwachungsvorrichtung 4 als optische Meldeeinrichtung
mit Leuchtdiode 5, Vorwiderstand 6 und Überbrückungsdiode 7 ausgebildet.

Die Installationsanlage nach Fig. 5 arbeitet mit einer akustisch wirkenden Überwachungsvorrichtung 4. Um die Stoßstrombelastung am Kaltleiterelement 2 zu verringern, ist diesem ein Kondensator 8 mit dem Ersatzwiderstand 9 parallelgeschaltet.

Da bei Überlandnetzen der Neutralleiter in der Regel über den Außenleitern angebracht ist, ist in einer Schutzeinrichtung gegen Überspannungen auch der Neutralleiter durch Überspannungsableiter zu sichern, da Blitze in der Regel in den Neutralleiter einschlagen. Davon abgesehen, ist der Neutralleiter in üblicher Weise geerdet vorzustellen.

Im weiteren Ausführungsbeispiel nach Fig. 6 ist die Überwachungseinrichtung 4 im wesentlichen ein Relais 10, das eine Meldeleitung 11 beaufschlagt.

Die Einrichtung nach Fig. 6 kann gemäß Fig. 3 auch so abgewandelt werden, daß das Relais 10 mit Schaltkontakten 12 in der Leitung zwischen Netz und Überspannungsableiter 1 in direkter Wirkverbindung steht, wie es in Fig. 3 veranschaulicht ist. Man kann die Schaltkontakte 12 als Arbeitskontakte des Relais 10 bzw. eines Schützes auffassen.

5 Patentansprüche
6 Figuren

0173016

- 6 -    VPA 84 P 3347 E

Patentansprüche

1. Elektrische Installationsanlage zur Speisung von Verbrauchern, insbesondere mit elektronischen Bauteilen, aus einem Netz, die durch Überspannungsableiter (1) zu Erdpotential gegen Überspannung gesichert sind, wobei die Überspannungsableiter selbst durch eine Vorrichtung gesichert sind, d a d u r c h  g e k e n n - z e i c h n e t , daß jedem Überspannungsableiter (1) erdseitig ein Kaltleiterelement (2) funktionsmäßig in Reihe nachgeschaltet ist.

2. Elektrische Installationsanlage nach Anspruch 1, d a d u r c h  g e k e n n z e i c h n e t , daß mit den Überspannungsableitern (1) erdseitig ein Kaltleiterelement (2) verbunden ist, von dessen Anschlüssen (3) jeweils eine elektrisch leitende Verbindung zu einer Überwachungseinrichtung (4) geführt ist.

3. Elektrische Installationsanlage nach Anspruch 2, d a d u r c h  g e k e n n z e i c h n e t , daß die Überwachungseinrichtung (4) ein Relais (10) ist, das eine Meldeleitung (11) beaufschlagt.

4. Elektrische Installationsanlage nach Anspruch 2, d a d u r c h  g e k e n n z e i c h n e t , daß einem Kaltleiterelement (2) ein Kondensator (8) parallelgeschaltet ist, gegebenenfalls in Reihe mit einem Widerstand (9).

5. Elektrische Installationsanlage nach Anspruch 2, d a d u r c h  g e k e n n z e i c h n e t , daß die Überwachungseinrichtung (4) ein Relais (10) ist, das jeweils mit Schaltkontakten (12) in der Leitung zwischen Netz und Überspannungsableiter (1) in Wirkverbindung steht.

0173016

FIG 1

FIG 2

FIG 3

FIG 4

FIG 5

FIG 6